**Europäisches Patentamt**

**European Patent Office**

**Office européen des brevets**

(19)

(11) **EP 1 231 750 A2**

(12) **EUROPÄISCHE PATENTANMELDUNG**

(43) Veröffentlichungstag:
**14.08.2002 Patentblatt 2002/33**

(51) Int Cl.⁷: **H04L 25/49**

(21) Anmeldenummer: **02100106.0**

(22) Anmeldetag: **05.02.2002**

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI** | (72) Erfinder:<br>• **Zinke, Manfred, Philipds Corp. Int. Prop. GmbH**<br>**52066 Aachen (DE)**<br>• **Wolf, Mike, Philips Corp. Int. Prop. GmbH**<br>**52066 Aachen (DE)** |
| (30) Priorität: **07.02.2001 DE 10105794** | (74) Vertreter: **Volmer, Georg, Dipl.-Ing. et al**<br>**Philips Corporate Intellectual Property GmbH,**<br>**Weisshausstrasse 2**<br>**52066 Aachen (DE)** |
| (71) Anmelder:<br>• **Philips Corporate Intellectual Property GmbH**<br>**52066 Aachen (DE)**<br>Benannte Vertragsstaaten:<br>**DE**<br>• **Koninklijke Philips Electronics N.V.**<br>**5621 BA Eindhoven (NL)**<br>Benannte Vertragsstaaten:<br>**DE FR GB IT** | |

(54) **Synchronisierungsmuster zur Anwendung bei Zeitlagenkodierung**

(57) Die Erfindung bezieht sich auf ein Kommunikationssystem mit Mitteln zur Übertragung eines Datenstroms über ein Übertragungsmedium mittels Zeitlagencodierung. Es ist ein Synchronisationsmuster zur Einfügung in den Datenstrom vorgesehen, welches derart gewählt ist, dass es sich von allen gültigen Datensignalen der Zeitlagencodierung unabhängig von der jeweiligen Zeitlage der Datensignale um eine vorgebbare Hamming-Distanz unterscheidet und dass es sich von allen zeitlich verschobenen Versionen des Synchronisationsmusters um eine vorgebbare Hamming-Distanz unterscheidet.

FIG. 3

**EP 1 231 750 A2**

**Beschreibung**

Die Erfindung bezieht sich auf ein Kommunikationssystem, ein Verfahren und ein Signal für zeitlagencodierte Datenübertragung. Bei einem zeitlagencodierten Übertragungssystem erfolgt die Codierung mittels der zeitlichen Lage eines oder mehrerer Impulse innerhalb eines Zeitrahmens. Ein vielfach verwendetes Modulationsverfahren für zeitlagencodierte Datenübertragung ist das PPM-Verfahren (Pulse-Position Modulation), das sowohl für drahtgebundene als auch für drahtlose Nachrichtenübertragungssysteme geeignet ist. Innerhalb eines PPM-Symbols werden ldL Bit durch die Position *eines* Impulses codiert. Jedes Symbol ist in $L$ Zeitschlitze, die auch als Chips bezeichnet werden, unterteilt. Die zu übertragene Information bestimmt über eine Zuordnungstabelle die Position des Chips, der eine "1", d.h. einen Impuls aufweist. Vorteile der PPM-Übertragung liegen beispielsweise in der Leistungseffizienz und der Resistenz gegenüber Hochpassfilterung. Ein Beispiel ist der 4-PPM-Modus von IrDa-Schnittstellen(Infrared Data Association).
Ein wesentliches Realisierungsproblem ist die empfangsseitige Synchronisation der PPM-Symbole.
Eine Decodierung der übertragenen Information ist nur möglich, wenn die PPM-Symbole empfangsseitig synchronisiert werden können, dh. deren Phasenlage bekannt ist.
Wird gleichzeitig im Zeitmultiplex-Betrieb gearbeitet (TDM: Time Division Multiplex), müssen zusätzlich die TDM-Rahmen synchronisiert werden

Es ist Aufgabe der Erfindung, ein Kommunikationssystem zu schaffen, welches eine vorteilhafte Synchronisation zeitlagencodierter Datensignale ermöglicht. Die Aufgabe besteht weiterhin darin, ein diesbezügliches Verfahren und ein geeignetes Signal anzugeben.

Diese Aufgabe ist bezüglich des Kommunikationssystems erfindungsgemäß gelöst durch ein Kommunikationasystem mit Mitteln zur Übertragung eines Datenstroms über ein Übertragungsmedium mittels Zeitlagencodierung. wobei ein Synchronisationsmuster zur Einfügung in den Datenstrom vorgesehen ist, wobei das Synchronisationsmuster derart gewählt ist, dass es sich von allen gültigen Datensignalen der Zeitlagencodierung unabhängig von der jeweiligen Zeitlage der Datensignale um eine vorgebbare Hamming-Distanz unterscheidet und dass es sich von allen zeitlich verschobenen Versionen des Synchronisationsmusters um eine vorgebbare Hamming-Distanz unterscheidet.

Bei diesem Kommunikationssystem besitzt das Synchronisationsmuster eine bestimmte, vorgebbare Hamming-Distanz zu allen gültigen Datensignalen der Zeitlagencodierung, unabhängig von deren Phasenlage. Unter einem gültigen Datensignal wird ein Signal verstanden, das entsprechend der jeweiligen Kodiervorschrift der jeweiligen Zeitlagencodierung gebildet ist. Bei einem 4-PPM-System besteht z.B. ein 4-PPM-Symbol aus jeweils 4 Zeitschlitzen, welche auch als Chips bezeichnet werden. Die Kodiervorschrift für 4-PPM besagt, dass innerhalb des Zeitrahmens eines PPM-Symbols nur jeweils ein Chip den Wert "1" aufweisen darf, d.h., dass innerhalb des Zeitrahmens eines PPM-Symbols nur jeweils ein Impuls vorhanden sein darf. Außerdem besitzt das Synchronisationsmuster eine bestimmte, vorgebbare Hamming-Distanz zu allen verschobenen Versionen des gesendeten Synchronisationsmusters, an das sich gültige zeitlagencodierte Symbole anschließen.

Dadurch ist es möglich, das Synchronisationsmuster zu beliebigen Zeitpunkten und nicht nur innerhalb einer Trainingssequenz am Anfang einer Datenübertragung einzufügen. Bei einer ATM (Asynchronous Transfer Modus) -Datenübertragung ist es z.B. möglich, das Muster vor jeder ATM-Zelle zu senden. Dadurch ist auch nach einem Synchronisationsverlust das richtige Empfangen der nächsten ATM-Zelle sichergestellt.

Bei der vorteilhaften Ausgestaltung des Kommunikationssystems nach Anspruch 2 kann eine je nach Bedarf wählbare Toleranz gegenüber Übertragungsfehlern erreicht und somit ein sicheres Synchronisieren auch bei schlechten Kanälen erreicht werden. Dabei können einerseits durch eine ausreichende Hammingdistanz zwischen jeder möglichen gültigen Datensequenz der Zeitlagencodierung und dem Synchronisationsmuster Chipfehler beim Empfang eines gestörten Synchronisationsmusters ausgeglichen werden. Andererseits kann die Wahrscheinlichkeit gering gehalten werden, irrtümlich ein Synchronisationsmuster zu empfangen.

Bei der vorteilhaften Ausgestaltung der Erfindung nach Anspruch 3 erfolgt eine Neusynchronisation, wenn ein bestimmter Schwellwert an Unterschieden zwischen dem empfangenen Datenstrom und dem Synchronisationsmuster unterschritten oder gerade erreicht wird. Ist der Schwellwert beispielsweise $C$, können so $C$ beim Übertragen des Musters eventuell aufgetretene Fehler korrigiert werden. Damit es während einer normalen zeitlagencodierten Datenübertragung nicht zu einer falschen Synchronisation durch die zufällige Imitation des Synchronisationsmusters infolge von Übertragungsfehlern kommt, unterscheidet sich das Synchronisationsmuster um eine bestimmte Anzahl von Stellen von jeder möglichen Datensequenz der Zeitlagencodierung, unabhängig von deren Chipverzögerung. Diese Anzahl von Stellen wird auch als Hamming-Distanz bezeichnet. Hat diese Anzahl die Größe $D$, müssen demnach innerhalb der Synchronisationsmusterlänge $(D - C)$ Übertragungsfehler auftreten, damit das Synchronisationsmuster imitiert wird. Um ein Erkennen des gesendeten Synchronisationsmusters zum richtigen Chiptakt zu gewährleisten, unterscheidet sich das Synchronisationsmuster zusätzlich von allen verschobenen Versionen des Synchronisationsmuster sowie des Synchronisationsmuster mit beliebigen angrenzenden zeitlagencodierten Daten um eine bestimmte Hammingdistanz E, die aber nicht notwendigerweise mit der Hammingdistanz D übereinstimmen muss. Unterscheidet sich demzufolge eine empfangene Chipsequenz nur um eine bestimmte und je nach Anforderungen und möglichem Aufwand wählbare Anzahl von Chips vom Synchronisationsmuster, wird sie diesem zugeordnet und ein Synchronisationsimpuls erzeugt.

Bei der vorteilhaften Ausgestaltung der Erfindung nach Anspruch 4 ist das Kommunikationssystem ein TDMA (Time Division Multiple Access)-System. Bei einem derartigen System ist es mittels des Synchronisationsmusters möglich, gleichzeitig eine Rahmensynchronisation des TDMA-Zeitrahmens und eine Symbolsynchronisation der Symbole der Zeitlagensynchronisierung, z.B. der PPM-Symbole, durchzuführen.

Bei der vorteilhaften Ausgsstaltung der Erfindung gemäß Anspruch 5 erfolgt der Vergleich der empfangenen Chipsequenz mit dem gespeicherten Synchronisationsmuster mit Hilfe eines $N$-stelligen Schieberegisters, dessen $N$ parallele Ausgänge paarweise mit Hilfe von z.B. Äquivalenzgattern mit dem gespeicherten Synchronisationsmuster verglichen werden. Der Aufwand für den Synchronisationsdetektor kann insbesondere dadurch gering gehalten werden, in dem die Addition der Äquivalenzgatterausgänge mit führender "0" (Nicht-Übereinstimmungen) nur Modulo $C$ + 2 erfolgt.

Der Detektor erzeugt genau dann einen Synchronisationsimpuls, wenn dessen intern gespeichertes Muster der Länge $N$ bis auf eine Anzahl toleriexbarer Stellen bzw. Fehler mit den letzten $N$ empfangenen Chips übereinstimmt. Dabei entspricht das in dem Detektor gespeicherte Synchronisationsmuster dem in den Datenstrom eingefügten und gesendeten Synchronisationsmuster oder es stellt einen Ausschnitt des gesendeten Synchronisationsmusters dar. So kann das gesendete Synchronisationsmuster z.B. verlängert werden, um den Signalmittelwert aufrecht zu erhalten oder einer Byte-Orientierung zu genügen. Der Vergleich des empfangsseitig gespeicherten Synchronisationsmusters mit dem empfangenen Datenstrom erfolgt zu jedem Chiptakt.

Der Synchronisationsdetektor gemäß Anspruch 6 ist besonders einfach und kostengünstig realisierbar.

Anspruch 7 bezieht sich auf ein erfindungsgemäßes zeitlagencodiertes Signal und Anspruch 8 auf ein diesbezügliches Übertragungsverfahren.

Einige schematisch dargestellte Ausführungsbeispiele der Erfindung werden nachfolgend anhand der Zeichnung in den Fig 1 bis 8 näher dargestellt. Es zeigen:

Fig. 1    ein Kommunikationssystem mit vier Kommunikationsknoten, welche mit einem gemeinsamen Übertragungsmedium gekoppelt sind,

Fig. 2    das Prinzip einer 4-PPM (PPM=Pulse Position Modulation) Übertragung,

Fig. 3    ein Beispiel für ein Sende-Synchronisationsmuster Tx und ein Empfangs-Synchronisationsmuster Rx mit zugeordneten gültigen Datensignalen der Hamming-Distanz 3,

Fig.4    einen Synchronisationsdetektor zum kontinuierlichen Vergleich einer empfangenen Chipsequenz mit einem Empfangs-Synchronisationsmuster Rx,

Fig. 5    Sende-Synchronisationsmuster Tx und Empfangs-Synchronisationsmuster Rx für 4-PPM und die Hamming-Distanz 3,

Fig. 6    Sende-Synchronisationsmuster Tx und Empfangs-Synchronisationsmuster Rx für 4-PPM und die Hamming-Distanz 4,

Fig. 7    Sende-Synchronisationsmuster Tx und Empfangs-Synchronisationsmuster Rx für 4-PPM und die Hamming-Distanz 5,

Fig. 8    Sende-Synchronisationsmuster Tx und Empfangs-Synchronisationsmuster Rx für 4-PPM und die Hamming-Distanz 6.

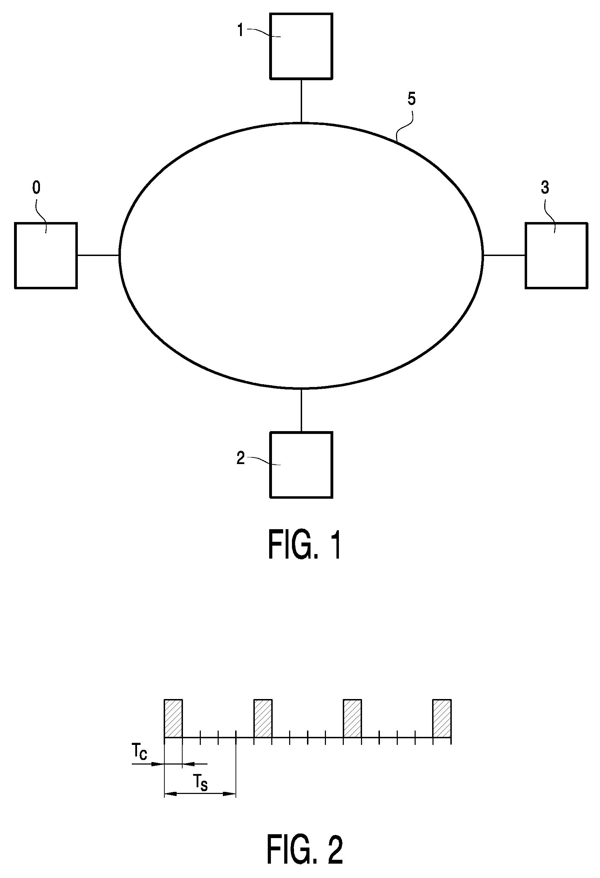

Fig. 1 zeigt ein Kommunikationssystem mit vier Kommunikationsknoten 0, 1, 2 und 3.

Die vier Kommunikationsknoten 0 bis 3 sind jeweils mit einem gemeinsamen Übertragungsmedium 5 gekoppelt. Das gemeinsame Übertragungsmedium 5 ist bevorzugt ein Medium, das für optische Datenübertragung geeignet ist, z.B. ein optisches Bussystem oder ein Kanal zur drahtlosen Übertragung von Informationen mittels Infrarot. Das gemeinsame Übertragungsmedium 5 wird von den vier Kommunikationsknoten bevorzugt im Zeitmultiplexverfahren genutzt.

Um Daten über das Übertragungsmedium 5 zu übertragen, ist eine zeitlagencodierte Nachrichtenübertragung vorgesehen. Bei einem zeitlagencodierten Übertragungssystem erfolgt die Codierung mittels der zeitlichen Lage eines oder mehrerer Impulse innerhalb eines Zeitrahmens. Ein vielfach verwendetes Modulationsverfahren für zeitlagencodierte Datenübertragung ist das PPM-Verfahren (Pulse-Position Modulation), das sowohl für drahtgebundene als auch für drahtlose Nachrichtenübertragungssysteme geeignet ist.

Fig 2 zeigt das Prinzip einer 4-PPM (PPM=Pulse Position Modulation) Übertragung Eine derartige Übertragung wird z.B. für IrDa-Schnittstellen(Infrared Data Association) verwendet. Innerhalb des 4-PPM-Symbols werden 2 Bit durch die Position *eines* Impulses codiert. Jedes 4-PPM-Symbol ist in 4 Zeitschlitze, die auch als Chips bezeichnet werden, unterteilt. Die zu übertragene Information bestimmt über eine Zuordnungtabelle die Position des Chips, der einen Impuls, d.h. die Information "1" aufweist. Die zeitliche Dauer eines Chips ist in der Fig. 2 mit Tc bezeichnet, die zeitliche Dauer eines Symbols, das 4 Chips aufweist, mit Ts. Fig. 2 zeigt 4 PPM- Symbole mit der Zeitdauer von jeweils Ts, wobei in dem ersten Symbol der erste Chip, in dem zweiten Symbol der zweite Chip, in dem dritten Symbol der dritte Chip und in dem vierten Symbol der vierte Chip den Wert "1" haben. Dies ist jeweils mittels der umrahmten und schraffierten Rechtecke dargestellt. Eine Decodierung der übertragenen Information ist nur möglich, wenn die 4-PPM-Symbole empfangsseitig synchronisiert werden können (dh. deren Phasenlage bekannt ist). Um empfangsseitig eine Synchronisation durchführen zu können, ist vorgesehen, sendeseitig ein Synchronisationsmuster in den Datenstrom einzufügen. Zur Synchronisation auf der Empfängerseite ist nun vorgesehen, eine kontinuierliche Überprüfung des Datenstroms hinsichtlich des Synchronisationsmusters durchzuführen.

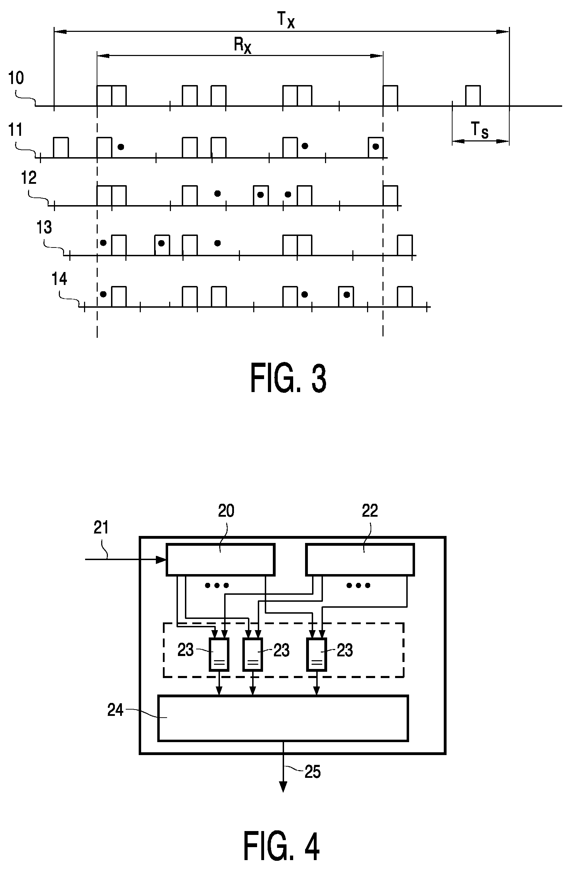

Fig. 3 zeigt ein Beispiel für ein Sende-Synchronisationsmuster Tx und Empfangs-Synchronisationsmuster Rx. Das Sende-Synchronisationsmuster Tx und Empfangs-Synchronisationsmuster Rx sind auf dem Zeitstrahl 10 über der Zeit dargestellt, wobei die Länge des Sende-Synchronisationsmuster mit Tx und des Empfangs-Synchronisationsmuster mit Rx bezeichnet ist. Es ist zu berücksichtigen, dass das empfangsseitige Empfangs-Synchronisationsmuster Rx nur einen Teilabschnitt des sendeseitigen Sende-Synchronisationsmuster Tx darstellt. Die übrigen Chips des Sende-Synchronisationsmuster Tx dienen dazu, bestimmte Eigenschaften wie den Mittelwert des Sendesignals zu garantieren oder auch nur der Byte-Orientierung der Übertragung zu entsprechen. Das Empfangs-Synchronisationsmuster Rx gemäß Fig. 3 unterscheidet sich an mindestens 3 Stellen von jeder möglichen gültigen 4-PPM-Sequenz und weist somit die Hamming-Distanz 3 zu allen gültigen Datensignalen der Zeitlagencodierung, unabhängig von deren Phasenlage, auf. Unter einem gültigen Datensignal wird ein Signal verstanden, das entsprechend der jeweiligen Kodiervorschrift der jeweiligen Zeitlagencodierung gebildet ist. Bei dem 4-PPM-System gemäß Fig. 2 und 3 besteht die Kodiervorschrift darin, dass innerhalb des Zeitrahmens eines 4-PPM-Symbols nur jeweils ein Chip den Wert "1" aufweisen darf, d.h., dass innerhalb des Zeitrahmens eines 4-PPM-Symbols nur jeweils ein Impuls vorhanden sein darf. Außerdem besitzt das empfangsseitige Empfangs-Synchronisationsmuster Rx die Hamming-Distanz 3 zu allen verschobenen Versionen des Sende-Synchronisationsmuster Tx, an das sich gültige 4-PPM-Symbole anschließen.

Unterhalb des Zeitstrahls 10 in Fig. 3 sind jeweils gültige 4-PPM Datensequenzen dargestellt, wobei die Datensequenzen jeweils so gewählt sind, dass sich eine größtmögliche Anzahl von Übereinstimmungen mit dem Empfangs-Synchronisationsmuster Rx ergibt. Bei der auf dem Zeitstrahl 11 dargestellten Datensequenz ist der Symboltakt der 4-PPM Symbole um einen Chip dem Symboltakt des Sende-Synchronisationsmuster Tx und des Empfangs-Synchronisationsmuster Rx voraus. Der Symboltakt der auf dem Zeitstrahl 12 dargestellten Datensequenz entspricht dem Zeittakt des Sende-Synchronisationsmuster Tx und des Empfangs-Synchronisationsmuster Rx. Der Symboltakt der auf dem Zeitstrahl 13 dargestellten Datensequenz ist um einen Chip gegenüber dem Symboltakt des Sende-Synchronisationsmuster Tx und des Empfangs-Synchronisationsmuster Rx verzögert und der Symboltakt der auf dem Zeitstrahl 14 dargestellten Datensequenz ist um zwei Chips gegenüber dem Symboltakt des Sende-Synchronisationsmuster Tx und des Empfangs-Synchronisationsmuster Rx verzögert.

Obwohl die jeweiligen Datensequenzen so gewählt sind, dass sich eine größtmögliche Anzahl von Übereinstimmungen mit dem Empfangs-Synchronisationsmuster Rx ergibt, sind jeweils an 3 Stellen Unterschiede vorhanden. Diese Stellen, an denen sich dem Empfangs-Synchronisationsmuster Rx und 4-PPM-Datensequenz (Beispiel) unterscheiden, sind durch Punkte gekennzeichnet.

Damit der Synchronisationszeitpunkt richtig detektiert wird, wird die Hammingdistanz von 3 auch dann garantiert, wenn sich im Schieberegister eines Synchronisationsdetektors ein verschobenes Sende-Synchronisationsmuster Tx mit angrenzenden Daten befindet.

Mittels eines derartigen Musters ist es möglich, das Synchronisationsmuster zu beliebigen Zeitpunkten und nicht nur innerhalb einer Trainingssequenz am Anfang einer Datenübertragung zu senden. Bei einer ATM (Asynchronous Transfer Modus)-Datenübertragung ist es z.B. möglich, das Muster vor jeder ATM-Zelle zu senden. Dadurch ist auch nach einem Synchronisationsverlust das richtige Empfangen der nächsten ATM-Zelle sichergestellt.

Die Fig. 4 zeigt einen Synchronisationsdetektor, mittels dem ein kontinuierlicher Vergleich der empfangenen Chipsequenz mit dem Empfangs-Synchronisationsmuster Rx durchgeführt werden kann. Hierzu weist der Synchronisationsdetektor ein N-stelliges Schieberegister 20 auf. Dem Schieberegister 20 wird eingangsseitig der Datenstrom der empfangenen Chipsequenzen zugsführt, dargsstellt durch den Pfeil 21. Der Synchronisationsdetektor weist einen statischen Datenspeicher 22 der Länge N auf, in dem das Empfangs-Synchronisationsmuster Rx gespeichert ist. Das Schieberegister 20 und der statische Datenspeicher 21 weisen jeweils *N* parallele Ausgangs auf. Die Länge N des Datenspeichers 22 und des Schieberegisters 20 entspricht der Länge N des Empfangs-Synchronisationsmuster Rx. Die N parallelen Ausgänge des Datenspeichers 22 und des Schieberegisters 20 sind jeweils paarweise mit den Eingängen von Äquivalenzgattern 23 gekoppelt. Die Ausgänge der Äquivalenzgatter 23 sind mit dem Eingang eines Schwellwertentscheiders 24 gekoppelt. Mittels der Äquivalenzgatter 23 wird das im Schieberegister 20 gespeicherte Datensignal mit dem im Datenspeicher 22 abgelegtem Empfangs-Synchronisationsmuster Rx bitweise verglichen. Die Ausgangssignale der Äquivalenzgatter 23 werden in dem Schwellwertentscheider 24 addiert. Bei Überschreiten eines vorgebbaren Schwellwertes erzeugt der Schwellwertentscheider einen Synchronisationsimpuls 25. Der Schwellwert wird durch die Anzahl der korrigierbaren Fehler bestimmt. Das Empfangs-Synchronisationsmuster Rx gemäß Fig. 3 unterscheidet sich an mindestens 3 Stellen von jeder möglichen gültigen 4-PPM-Sequenz und weist somit die Hamming-Distanz 3 zu allen gültigen Datensignalen auf. Bei diesem Muster kann der Schwellwert z.B. auf den Wert 1, 2 oder 3 festgesetzt werden, je nachdem, welche Fehlerwahrscheinlichkeit für die Nichtdetektion oder die Imitation des Empfangs-Synchronisationsmuster Rx gefordert wird.

Der Aufwand für den Schwellwertentscheider 24 kann insbesondere dadurch gering gehalten werden, in dem die Addition der Ausgangs der Äquivalenzgatter 23 mit führender "0" (Nicht-Übereinstimmungen) nur Modulo $C + 2$ erfolgt.

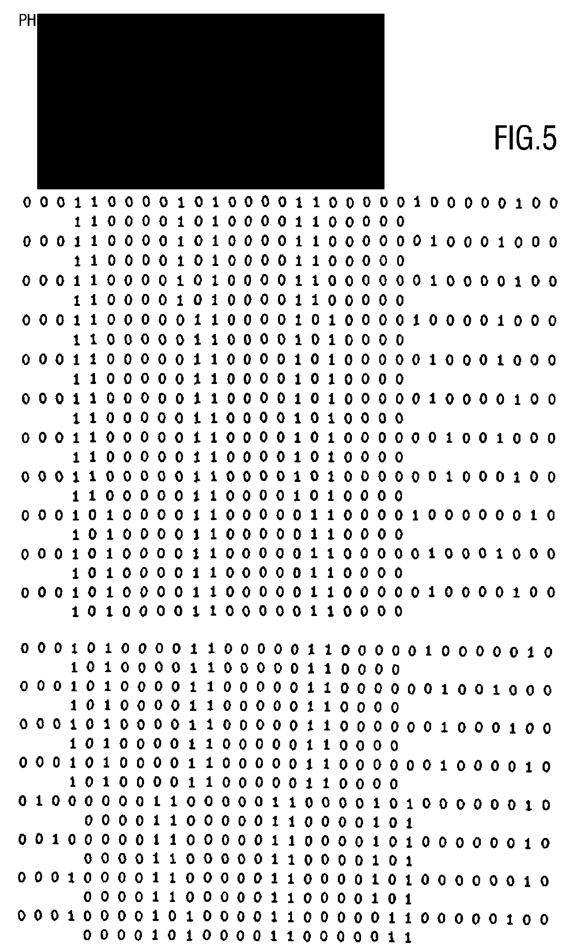

Die Fig. 5 bis 8 zeigen beispielhaft Sende-Synchronisationsmuster Tx und Empfangs-Synchronisationsmuster Rx für 4-PPM.

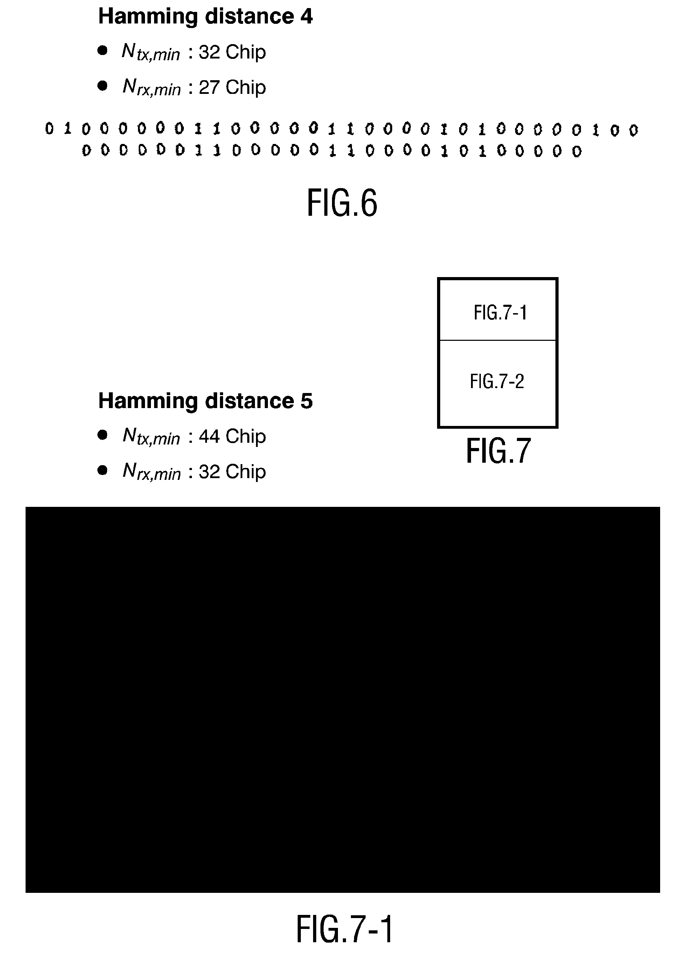

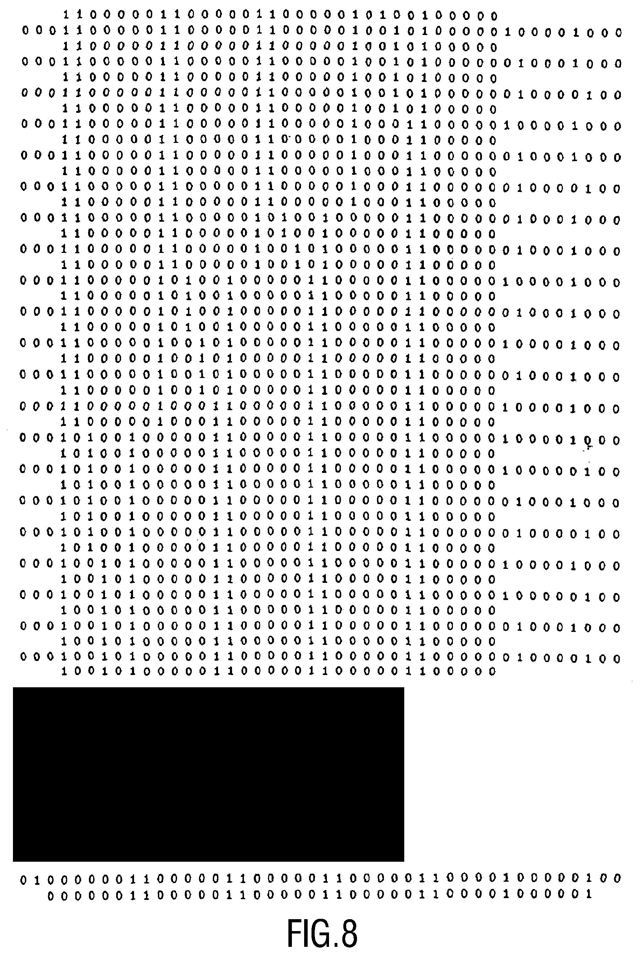

Fig. 5 zeigt dabei Muster für die Hamming-Distanz 3, Fig. 6 für die Hamming-Distanz 4, Fig. 7 für die Hamming-Distanz 5 und Fig 8 für die Hamming-Distanz 6. Tx- und Rx-Muster werden immer paarweise angegeben, wobei zunächst das Tx Muster und dann das Rx-Muster dargestellt ist.

Bei der Auswahl der Muster wurden folgende Kriterien berücksichtigt:

Als erstes Kriterium wurde berücksichtigt, dass das Tx-Muster den gleichen Mittelwert wie das zugehörige PPM-Signal, also $(1/L)$ besitzt. Zwar lassen sich mit OOK-Signalen auch mit kurzen Mustern ausreichende Hamming-Distanzen zwischen Muster und Signal erreichen, vor bzw. nach dem Muster muss jedoch eine zusätzliche Sequenz eingefügt werden, innerhalb derer sich der Empfänger auf den veränderten Signalmittelwert einstellen kann. Diese Sequenz ist bei der in der IEEE 820.11-Norm standardisierten Synchronisationsmethode allein z.B. 32 Chip lang.

Als zweites Kriterium wurde berücksichtigt, dass das Tx-Muster ähnliche Hochpass-Eigenschaften wie eine *L-PPM-Sequenz besitzt*. Bei der Mustersuche wurde deshalb die Auswahl auf folgende Muster beschränkt, die im Vergleich zu PPM-Datensequenzen folgende Eigenschaften haben:

| gültige PPM-Sequenz | Muster |
| --- | --- |
| max. 2 >>1<<-Chips in $L + 1$ Chips | max. 2 >>1<<-Chips in $L + 1$ Chips |
| max. 3 >>1<<-Chips in $2L + 1$ Chips | max. 3 >>1<<-Chips in $2L$ Chips |
| max. 4 >>1<<-Chips in $3L + 1$ Chips | - |
| ... | - |
| min. 1 >>1<<-Chip in $2L - 1$ Chips | min. 1 >>1<<-Chip in $2L - 1$ Chips |
| min. 2 >>1<<-Chip in $3L - 1$ Chips | min. 1 >>1<<-Chip in $3L$ Chips |
| min. 3 >>1<<-Chip in $4L - 1$ Chips | - |
| ... | - |

Für andere Anwendungen können diese Randbedingungen entschärft oder abgeändert werden.

Als drittes Kriterium wurde schließlich berücksichtigt, dass das Empfangs-Synchronisationsmuster Rx eine minimale Hamming-Distanz zu allen gültigen PPM-Datensequenzen besitzt, unabhängig von deren Phasenlage (in Chip) und zu allen verschobenen Versionen des Sende-Synchronisationsmuster Tx (an das sich gültige PPM-Symbole anschließen).Dadurch ist es möglich, das Muster zu beliebigen Zeitpunkten -und nicht nur innerhalb einer Trainingsequenz zu senden. Im konkreten Beispiel des IR-Systems wird das Muster vor jeder ATM-Zelle gesendet. Dadurch ist auch nach einem Synchronisationsverlust das richtige Empfangen der nächsten ATM-Zelle sichergestellt.

Die Suche wurde mittels eines Computerprogramms durchgeführt und auf Sende-Synchronisationsmuster Tx beschränkt, deren Länge ein Vielfaches von $L = 4$ ist. Für jede Hammingdistanz wird die minimale Länge Ntx des Sende-Synchronisationsmuster Tx angsgsben, für die die obigen Bedingungen erfüllt sind Da die Anzahl der Muster sehr groß sein kann, werden nur die Muster angegeben, für die die Längs *Nrx* des Empfangssynchronisationsmuster Rx minimal ist. Zusätzlich zu den angegebenen Mustern gelten immer die gespiegelten Varianten. Für Tx-Musterlängen bis 3 Byte wurden Muster bis zu einer Hamming-Distanz $dh = 6$ gefunden.

Je nach Applikation und Anforderungen des Kommunikationssystems können die obigen Kriterien auch abgeändert bzw. andere Kriterien aufgestellt werden und dementsprechend mittels Computersimulation auch andere Muster aufgefunden werden.

Bei der Synchronisationsfehlerwahrscheinlichkeit muss unterschieden werden zwischen der Wahrscheinlichkeit, dass ein gesendetes Muster nicht detektiert wird und der Wahrscheinlichkeit, dass während einer PPM-Datensequenz irrtümlicherweise ein Synchronisationsimpuls erzeugt wird (falscher Alarm). Beide Wahrscheinlichkeiten werden mit *p e,loss* bzw. *p e,!alse* bezeichnet.

Beträgt die Länge des Rx-Musters *Nrx* und werden *dc* Fehler durch die Entscheiderschwelle toleriert, wird ein gesendetes Muster nicht detektiert mit der Wahrscheinlichkeit:

$$P_{e,loss} = 1 - (1 - P_{e,chip})^{N_{rx}} - \sum_{i=1}^{d_c} \binom{N_{rx}}{i} P_{e,chip}^{i}(1 - P_{e,chip})^{N_{rx}-i}. \tag{1}$$

$P_{e,chip}$ ist die Chipfehlerwahrscheinlichkeit. Im Gegensatz dazu tritt ein falscher Alarm auf, wenn innerhalb der mindestens $d_h$ unterschiedlichen Chippositionen ($d_h$ : Hammingdistanz) wenigstens $d_h - d_c$ Fehler auftreten. Für jeden Chiptakt ist die Wahrscheinlichkeit eines falschen Alarms:

$$P_{e,false} \leq \sum_{i=(d_h-d_c)}^{d_h} \binom{d_h}{i} P_{e,chip}^{i}(1 - P_{e,chip})^{d_h-i} \tag{2}$$

Das Gleichheitszeichen gilt jedoch nur, wenn eine PPM-Datensequenz gesendet wird, die sich an nicht mehr als an dh-Stellen vom Rx-Muster unterscheidet. Per Geradeaussimulation wurde die Wahrscheinlichkeit einer solchen Konstellation für verschiedene Rx-Muster der Distanzen 5 und 6 ermittelt. Sie betrug in allen Fällen weniger als 1/1000. Zur groben Abschätzung kann (2) demnach für gleichwahrscheinliche Daten mit (J/1OOO) multipliziert werden.
Es ist wesentlich einfacher, nur am Beginn einer Übertragung im Anschluss an eine definierte Trainingssequenz und der Carrier-Detektion nach dem Muster zu suchen und nach erfolgreicher Detektion diese Suche zu beenden. In diesem Fall muss sich das Muster nur von der Trainingssequenz und nicht von jeder möglichen PPM-Datensequenz unterscheiden, um nicht falsch detektiert zu werden.

**Patentansprüche**

1. Kommunikationssystem mit Mitteln zur Übertragung eines Datenstroms über ein Übertragungsmedium mittels Zeitlagencodierung,
   wobei ein Synchronisationamuster zur Einfügung in den Datenstrom vorgesehen ist,
   wobei das Synchronisationsmuster derart gewählt ist, dass es sich von allen gültigen Datensignalen der Zeitlagencodierung unabhängig von der jeweiligen Zeitlage der Datensignale um eine vorgebbare Hamming-Distanz unterscheidet und dass es sich von allen zeitlich verschobenen Versionen des Synchronisationsmusters um eine vorgebbare Hamming-Distanz unterscheidet.

2. Kommunikationssystem nach Anspruch 1,
   **dadurch gekennzeichnet,**
   **dass** die vorgebbare Hamming-Distanz größer oder gleich 2 ist.

3. Kommunikationssystem nach Anspruch 1,
   **dadurch gekennzeichnet,**
   **dass** ein Synchronisationsdetektor zum kontinuierlichen Vergleich des empfangenen Datenstroms mit dem Synchronisationsmuster vorgesehen ist und dass der Synchronisationsdetektor zur Erzeugung eines Synchronisationsimpulses vorgesehen ist, wenn die Hamming-Distanz zwischen dem empfangenen Datenstrom und dem Synchronisationsmuster einen vorgebbaren Schwellschwert unterschreitet.

4. Kommunikationssystem nach Anspruch 3,
   **dadurch gekennzeichnet,**
   **dass** das Kommunikationssystem ein TDMA-System (Time Division Multiple Access) ist und dass der Synchronisationsdetektor sowohl zur Symbolsynchronisation der Zeitlagencodierung als auch zur Rahmensynchronisation des TDMA-Zeitrahmens vorgesehen ist.

5. Kommunikationssystem nach Anspruch 3,
   **dadurch gekennzeichnet,**
   **dass** der Synchronisationsdetektor ein Schieberegister mit parallelen Ausgängen aufweist, dem eingangsseitig der Datenstrom zugeführt wird, dass in dem Synchronisationsdetektor das Synchronisationsmuster gespeichert ist und dass der Synchronisationsdetektor zum paarweisen Vergleich des gespeicherten Synchronisationsmusters mit den Ausgangssignalen des Schieberegisters vorgesehen ist.

6. Synchronisationsdetektor zur Detektion eines Synchronisationsmusters innerhalb eines Datenstroms eines zeitlagencodierten Signals, wobei der Synchronisationsdetektor ein Schieberegister mit parallelen Ausgängen aufweist, dem eingangsseitig der Datenstrom zugeführt wird, wobei in dem Synchronisationsdetektor das Synchronisationsmuster gespeichert ist und wobei der Synchronisationsdetektor zum paarweisen Vergleich des gespeicherten Synchronisationsmusters mit den Ausgangssignalen des Schieberegisters vorgesehen ist.

7. Zeitlagencodiertes Signal, welches in regelmäßigen zeitlichen Abständen ein Synchronisationsmuster enthält, welches derart gewählt ist, dass es sich von allen gültigen Datensignalen der Zeitlagencodierung unabhängig von der jeweiligen Zeitlage der Datensignale um eine vorgebbare Hamming-Distanz unterscheidet und dass es sich von allen zeitlich verschobenen Versionen des Synchronisationsmusters um eine vorgäbbare Hamming-Distanz unterscheidet.

8. Verfahren zur Übertragung eines Datenstroms über ein Übertragungsmedium mittels Zeitlagencodierung wobei ein Synchronisationsmuster zur Einfügung in den Datenstrom vorgesehen ist, das derart gewählt ist, dass es sich von allen gültigen Datensignalen der Zeitlagencodierung unabhängig von der jeweiligen Zeitlage der Datensignale um eine vorgebbare Hamming-Distanz unterscheidet und dass es sich von allen zeitlich verschobenen Versionen des Synchronisationsmusters um eine vorgebbare Hamming-Distanz unterscheidet.

FIG. 1

FIG. 2

FIG. 3

FIG. 4

FIG.5

```
0 0 0 1 1 0 0 0 0 1 0 1 0 0 0 0 1 1 0 0 0 0 0 1 0 0 0 0 0 1 0 0
      1 1 0 0 0 0 1 0 1 0 0 0 0 1 1 0 0 0 0 0
0 0 0 1 1 0 0 0 0 1 0 1 0 0 0 0 1 1 0 0 0 0 0 0 1 0 0 0 1 0 0 0
      1 1 0 0 0 0 1 0 1 0 0 0 0 1 1 0 0 0 0 0
0 0 0 1 1 0 0 0 0 1 0 1 0 0 0 0 1 1 0 0 0 0 0 0 0 1 0 0 0 0 1 0 0
      1 1 0 0 0 0 1 0 1 0 0 0 0 1 1 0 0 0 0 0
0 0 0 1 1 0 0 0 0 0 1 1 0 0 0 0 1 0 1 0 0 0 0 1 0 0 0 0 1 0 0 0
      1 1 0 0 0 0 0 1 1 0 0 0 0 1 0 1 0 0 0 0
0 0 0 1 1 0 0 0 0 0 1 1 0 0 0 0 1 0 1 0 0 0 0 0 1 0 0 0 1 0 0 0
      1 1 0 0 0 0 0 1 1 0 0 0 0 1 0 1 0 0 0 0
0 0 0 1 1 0 0 0 0 0 1 1 0 0 0 0 1 0 1 0 0 0 0 0 1 0 0 0 0 1 0 0
      1 1 0 0 0 0 0 1 1 0 0 0 0 1 0 1 0 0 0 0
0 0 0 1 1 0 0 0 0 0 1 1 0 0 0 0 1 0 1 0 0 0 0 0 0 1 0 0 1 0 0 0
      1 1 0 0 0 0 0 1 1 0 0 0 0 1 0 1 0 0 0 0
0 0 0 1 1 0 0 0 0 0 1 1 0 0 0 0 1 0 1 0 0 0 0 0 0 0 1 0 0 0 1 0 0
      1 1 0 0 0 0 0 1 1 0 0 0 0 1 0 1 0 0 0 0
0 0 0 1 0 1 0 0 0 0 1 1 0 0 0 0 0 1 1 0 0 0 0 1 0 0 0 0 0 0 1 0
      1 0 1 0 0 0 0 1 1 0 0 0 0 0 1 1 0 0 0 0
0 0 0 1 0 1 0 0 0 0 1 1 0 0 0 0 0 1 1 0 0 0 0 0 1 0 0 0 1 0 0 0
      1 0 1 0 0 0 0 1 1 0 0 0 0 0 1 1 0 0 0 0
0 0 0 1 0 1 0 0 0 0 1 1 0 0 0 0 0 1 1 0 0 0 0 0 1 0 0 0 0 1 0 0
      1 0 1 0 0 0 0 1 1 0 0 0 0 0 1 1 0 0 0 0

0 0 0 1 0 1 0 0 0 0 1 1 0 0 0 0 0 1 1 0 0 0 0 0 1 0 0 0 0 0 1 0
      1 0 1 0 0 0 0 1 1 0 0 0 0 0 1 1 0 0 0 0
0 0 0 1 0 1 0 0 0 0 1 1 0 0 0 0 0 1 1 0 0 0 0 0 0 1 0 0 1 0 0 0
      1 0 1 0 0 0 0 1 1 0 0 0 0 0 1 1 0 0 0 0
0 0 0 1 0 1 0 0 0 0 1 1 0 0 0 0 0 1 1 0 0 0 0 0 0 1 0 0 0 1 0 0
      1 0 1 0 0 0 0 1 1 0 0 0 0 0 1 1 0 0 0 0
0 0 0 1 0 1 0 0 0 0 1 1 0 0 0 0 0 1 1 0 0 0 0 0 0 0 1 0 0 0 0 1 0
      1 0 1 0 0 0 0 1 1 0 0 0 0 0 1 1 0 0 0 0
0 1 0 0 0 0 0 0 1 1 0 0 0 0 0 1 1 0 0 0 0 1 0 1 0 0 0 0 0 0 1 0
      0 0 0 0 1 1 0 0 0 0 0 1 1 0 0 0 0 1 0 1
0 0 1 0 0 0 0 0 1 1 0 0 0 0 0 1 1 0 0 0 0 1 0 1 0 0 0 0 0 0 1 0
      0 0 0 0 1 1 0 0 0 0 0 1 1 0 0 0 0 1 0 1
0 0 0 1 0 0 0 0 1 1 0 0 0 0 0 1 1 0 0 0 0 1 0 1 0 0 0 0 0 0 1 0
      0 0 0 0 1 1 0 0 0 0 0 1 1 0 0 0 0 1 0 1
0 0 0 1 0 0 0 0 1 0 1 0 0 0 0 1 1 0 0 0 0 0 1 1 0 0 0 0 0 1 0 0
      0 0 0 0 1 0 1 0 0 0 0 1 1 0 0 0 0 0 1 1
```

**Hamming distance 4**

- $N_{tx,min}$ : 32 Chip

- $N_{rx,min}$ : 27 Chip

0 1 0 0 0 0 0 0 1 1 0 0 0 0 0 0 1 1 0 0 0 0 1 0 1 0 0 0 0 0 1 0 0
0 0 0 0 0 0 1 1 0 0 0 0 0 0 1 1 0 0 0 0 1 0 1 0 0 0 0 0

## FIG.6

| FIG.7-1 |
|---|
| FIG.7-2 |

## FIG.7

**Hamming distance 5**

- $N_{tx,min}$ : 44 Chip

- $N_{rx,min}$ : 32 Chip

## FIG.7-1

```
            1 1 0 0 0 0 0 1 1 0 0 0 0 0 1 1 0 0 0 0 0 1 0 1 0 0 1 0 0 0 0 0
      0 0 0 1 1 0 0 0 0 0 1 1 0 0 0 0 0 1 1 0 0 0 0 0 1 0 0 1 0 1 0 0 0 0 0 0 1 0 0 0 0 1 0 0 0
            1 1 0 0 0 0 0 1 1 0 0 0 0 0 1 1 0 0 0 0 0 1 0 0 1 0 1 0 0 0 0 0
      0 0 0 1 1 0 0 0 0 0 1 1 0 0 0 0 0 1 1 0 0 0 0 0 1 0 0 1 0 1 0 0 0 0 0 0 1 0 0 0 1 0 0 0
            1 1 0 0 0 0 0 1 1 0 0 0 0 0 1 1 0 0 0 0 0 1 0 0 1 0 1 0 0 0 0 0
      0 0 0 1 1 0 0 0 0 0 1 1 0 0 0 0 0 1 1 0 0 0 0 0 1 0 0 1 0 1 0 0 0 0 0 0 1 0 0 0 0 1 0 0
            1 1 0 0 0 0 0 1 1 0 0 0 0 0 1 1 0 0 0 0 0 1 0 0 1 0 1 0 0 0 0 0
      0 0 0 1 1 0 0 0 0 0 1 1 0 0 0 0 0 1 1 0 0 0 0 0 1 0 0 0 1 1 0 0 0 0 0 0 1 0 0 0 0 1 0 0 0
            1 1 0 0 0 0 0 1 1 0 0 0 0 0 1 1 0 0 0 0 0 1 0 0 0 1 1 0 0 0 0 0
      0 0 0 1 1 0 0 0 0 0 1 1 0 0 0 0 0 1 1 0 0 0 0 0 1 0 0 0 1 1 0 0 0 0 0 0 1 0 0 0 1 0 0 0
            1 1 0 0 0 0 0 1 1 0 0 0 0 0 1 1 0 0 0 0 0 1 0 0 0 1 1 0 0 0 0 0
      0 0 0 1 1 0 0 0 0 0 1 1 0 0 0 0 0 1 1 0 0 0 0 0 1 0 0 0 1 1 0 0 0 0 0 0 1 0 0 0 0 1 0 0
            1 1 0 0 0 0 0 1 1 0 0 0 0 0 1 0 1 0 0 1 0 0 0 0 0 1 1 0 0 0 0 0
      0 0 0 1 1 0 0 0 0 0 1 1 0 0 0 0 0 1 0 1 0 0 1 0 0 0 0 0 1 1 0 0 0 0 0 0 1 0 0 0 1 0 0 0
            1 1 0 0 0 0 0 1 1 0 0 0 0 0 1 0 0 1 0 1 0 0 0 0 0 1 1 0 0 0 0 0
      0 0 0 1 1 0 0 0 0 0 1 1 0 0 0 0 0 1 0 0 1 0 1 0 0 0 0 0 1 1 0 0 0 0 0 0 1 0 0 0 1 0 0 0
            1 1 0 0 0 0 0 1 1 0 0 0 0 0 1 0 0 1 0 1 0 0 0 0 0 1 1 0 0 0 0 0
      0 0 0 1 1 0 0 0 0 0 1 0 1 0 0 1 0 0 0 0 0 1 1 0 0 0 0 0 1 1 0 0 0 0 0 1 0 0 0 0 1 0 0 0
            1 1 0 0 0 0 0 1 0 1 0 0 1 0 0 0 0 0 1 1 0 0 0 0 0 1 1 0 0 0 0 0
      0 0 0 1 1 0 0 0 0 0 1 0 1 0 0 1 0 0 0 0 0 1 1 0 0 0 0 0 1 1 0 0 0 0 0 0 1 0 0 0 1 0 0 0
            1 1 0 0 0 0 0 1 0 1 0 0 1 0 0 0 0 0 1 1 0 0 0 0 0 1 1 0 0 0 0 0
      0 0 0 1 1 0 0 0 0 0 1 0 0 1 0 1 0 0 0 0 0 1 1 0 0 0 0 0 1 1 0 0 0 0 0 1 0 0 0 0 1 0 0 0
            1 1 0 0 0 0 0 1 0 0 1 0 1 0 0 0 0 0 1 1 0 0 0 0 0 1 1 0 0 0 0 0
      0 0 0 1 1 0 0 0 0 0 1 0 0 1 0 1 0 0 0 0 0 1 1 0 0 0 0 0 1 1 0 0 0 0 0 0 1 0 0 0 1 0 0 0
            1 1 0 0 0 0 0 1 0 0 1 0 1 0 0 0 0 0 1 1 0 0 0 0 0 1 1 0 0 0 0 0
      0 0 0 1 1 0 0 0 0 0 1 0 0 0 1 1 0 0 0 0 0 1 1 0 0 0 0 0 1 1 0 0 0 0 0 1 0 0 0 0 1 0 0 0
            1 1 0 0 0 0 0 1 0 0 0 1 1 0 0 0 0 0 1 1 0 0 0 0 0 1 1 0 0 0 0 0
      0 0 0 1 0 1 0 0 1 0 0 0 0 0 1 1 0 0 0 0 0 1 1 0 0 0 0 0 1 1 0 0 0 0 0 1 0 0 0 0 1 0 0 0
            1 0 1 0 0 1 0 0 0 0 0 1 1 0 0 0 0 0 1 1 0 0 0 0 0 1 1 0 0 0 0 0
      0 0 0 1 0 1 0 0 1 0 0 0 0 0 1 1 0 0 0 0 0 1 1 0 0 0 0 0 1 1 0 0 0 0 0 1 0 0 0 0 0 1 0 0
            1 0 1 0 0 1 0 0 0 0 0 1 1 0 0 0 0 0 1 1 0 0 0 0 0 1 1 0 0 0 0 0
      0 0 0 1 0 1 0 0 1 0 0 0 0 0 1 1 0 0 0 0 0 1 1 0 0 0 0 0 1 1 0 0 0 0 0 0 1 0 0 0 1 0 0 0
            1 0 1 0 0 1 0 0 0 0 0 1 1 0 0 0 0 0 1 1 0 0 0 0 0 1 1 0 0 0 0 0
      0 0 0 1 0 1 0 0 1 0 0 0 0 0 1 1 0 0 0 0 0 1 1 0 0 0 0 0 1 1 0 0 0 0 0 0 1 0 0 0 0 1 0 0
            1 0 1 0 0 1 0 0 0 0 0 1 1 0 0 0 0 0 1 1 0 0 0 0 0 1 1 0 0 0 0 0
      0 0 0 1 0 0 1 0 1 0 0 0 0 0 1 1 0 0 0 0 0 1 1 0 0 0 0 0 1 1 0 0 0 0 0 1 0 0 0 0 1 0 0 0
            1 0 0 1 0 1 0 0 0 0 0 1 1 0 0 0 0 0 1 1 0 0 0 0 0 1 1 0 0 0 0 0
      0 0 0 1 0 0 1 0 1 0 0 0 0 0 1 1 0 0 0 0 0 1 1 0 0 0 0 0 1 1 0 0 0 0 0 1 0 0 0 0 0 1 0 0
            1 0 0 1 0 1 0 0 0 0 0 1 1 0 0 0 0 0 1 1 0 0 0 0 0 1 1 0 0 0 0 0
      0 0 0 1 0 0 1 0 1 0 0 0 0 0 1 1 0 0 0 0 0 1 1 0 0 0 0 0 1 1 0 0 0 0 0 0 1 0 0 0 1 0 0 0
            1 0 0 1 0 1 0 0 0 0 0 1 1 0 0 0 0 0 1 1 0 0 0 0 0 1 1 0 0 0 0 0
      0 0 0 1 0 0 1 0 1 0 0 0 0 0 1 1 0 0 0 0 0 1 1 0 0 0 0 0 1 1 0 0 0 0 0 0 1 0 0 0 0 1 0 0
            1 0 0 1 0 1 0 0 0 0 0 1 1 0 0 0 0 0 1 1 0 0 0 0 0 1 1 0 0 0 0 0
```

```
0 1 0 0 0 0 0 0 1 1 0 0 0 0 0 1 1 0 0 0 0 0 1 1 0 0 0 0 0 1 1 0 0 0 0 1 0 0 0 0 0 1 0 0
      0 0 0 0 0 0 1 1 0 0 0 0 0 1 1 0 0 0 0 0 1 1 0 0 0 0 0 1 1 0 0 0 0 1 0 0 0 0 0 1
```

# FIG.8